# DEMANDE DE BREVET EUROPEEN

(11) **EP 1 193 960 A1**
(43) Date de publication de la demande: **03.04.2002**
(21) Numéro de dépôt: 01402475.6
(22) Date de dépôt: 26.09.2001
(51) Int. Cl.: H04M 3/493

(54) **Système de jeu**

(30) Priorité: 27.09.2000 FR 0012314
(71) Demandeur: FRANCE TELECOM, 75015 Paris (FR)
(72) Inventeur: Depuy, René, 92300 Levallois Perret (FR); Prouveur, Dominique, 77100 Meaux (FR)
(74) Mandataire: Jacobson, Claude

(57) **Abrégé**

Ce système de jeu est caractérisé en ce qu'il comporte un serveur vocal (14) de gestion et de contrôle du déroulement d'au moins un jeu, accessible à travers un réseau (8) de transmission d'informations à partir de bornes d'accès (6) multiples équipées de moyens audiophoniques (10) et comportant des moyens d'acquisition (12) d'informations d'accès et d'activation du jeu et des informations de jeu proprement dites, pour permettre à un joueur (2) de participer au jeu proposé par le serveur à partir d'une borné d'accès (6), sous la direction du serveur (14).

## Description

La présente invention concerne un système de jeu.

Il existe déjà dans l'état de la technique un grand nombre de systèmes de jeu qui utilisent uniquement des supports en papier.

Dans de tels systèmes, le joueur se procure un support en papier appelé ticket de jeu par exemple auprès d'un distributeur. Ce support comporte des informations de jeu et des informations d'authentification.

A titre d'exemple, on va décrire ci-dessous le cas particulier d'un jeu à tirage aléatoire, appelé jeu de loto. Un tel jeu est organisé par une société ci-dessous dénommée société de jeu.

Le fonctionnement du jeu de loto est le suivant : le joueur choisit plusieurs chiffres entre le chiffre 1 et le chiffre 45 par exemple et les coche sur une grille imprimée sur le ticket de jeu. Il se rend alors chez un distributeur équipé d'une borne d'accès à un serveur de jeu, fournie par la société de jeu et paye à ce dernier une somme correspondant à sa mise pour valider sa grille.

Les informations de jeu et les informations d'authentification des différents tickets de jeu sont alors saisies et peuvent par exemple être stockées au niveau du serveur de jeu, accessible, à travers un réseau de transmission d'informations, à partir de bornes d'accès mises à la disposition des distributeurs par la société de jeu.

Périodiquement, la société de jeu procède à un tirage aléatoire par exemple de huit chiffres, entre le chiffre 1 et le chiffre 45.

Après le tirage, et si le ticket de jeu est gagnant, c'est-à-dire qu'il comporte au moins par exemple trois des chiffres du tirage, le joueur retourne chez un distributeur équipé d'une borne d'accès au serveur de jeu.

Le joueur remet son ticket de jeu au distributeur qui vérifie l'authenticité du ticket à l'aide des informations correspondantes du ticket et éventuellement du serveur de jeu avant de remettre ses gains au joueur.

Les systèmes de jeu connus nécessitent donc la mise en place d'une infrastructure matérielle coûteuse, spécialement dédiée à un système de jeu d'une société de jeu en particulier.

Les principales sources de coût sont :
- la réalisation et l'impression des tickets de jeu ;
- la mise en place d'un réseau de distribution des tickets de jeu ; et
- l'équipement des distributeurs en bornes d'accès à un serveur de jeu.

La présente invention vise à remédier aux inconvénients des systèmes connus en créant un système de jeu dans lequel les coûts de mise en place de l'infrastructure du système de jeu sont réduits et offrant en plus une plus grande flexibilité d'utilisation et de nouvelles perspectives de jeu.

Elle a donc pour objet un système de jeu caractérisé en ce qu'il comporte un serveur vocal de gestion et de contrôle du déroulement d'au moins un jeu, accessible à travers un réseau de transmission d'informations à partir de bornes d'accès multiples équipées de moyens audiophoniques et comportant des moyens d'acquisition d'informations d'accès et d'activation du jeu et des informations de jeu proprement dites, pour permettre à un joueur de participer au jeu proposé par le serveur à partir d'une borne d'accès, sous la direction du serveur.

Suivant d'autres caractéristiques de l'invention :
- le réseau de transmission d'informations est un réseau téléphonique ;
- les bornes sont formées par des téléphones ;
- les téléphones sont des téléphones publics ;
- les bornes sont formées par des micro-ordinateurs équipés en outre de modulateurs/démodulateurs ;
- chaque borne d'accès comporte en outre un lecteur de carte à mémoire ;
- le lecteur de carte est adapté pour recevoir une carte de jeu prépayée portant les informations d'accès au jeu ;
- la carte à mémoire porte en outre les informations de jeu proprement dites ;
- la carte à mémoire est une carte de crédit permettant au joueur d'alimenter un compte jeu associé au serveur ;
- le serveur est associé à une première base de données contenant des informations de contrôle d'accès au jeu, une seconde base de données contenant des informations relatives aux réponses gagnantes au jeu et une troisième base de données contenant des informations relatives au gain du jeu.

L'invention sera mieux comprise à la lecture de la description qui va suivre, donnée uniquement à titre d'exemple et faite en se référant aux dessins annexés sur lesquels :
- la figure 1 représente l'architecture matérielle d'un système de jeu selon l'invention ;
- la figure 2 représente un exemple particulier de réalisation de l'architecture matérielle de la figure 1 ;

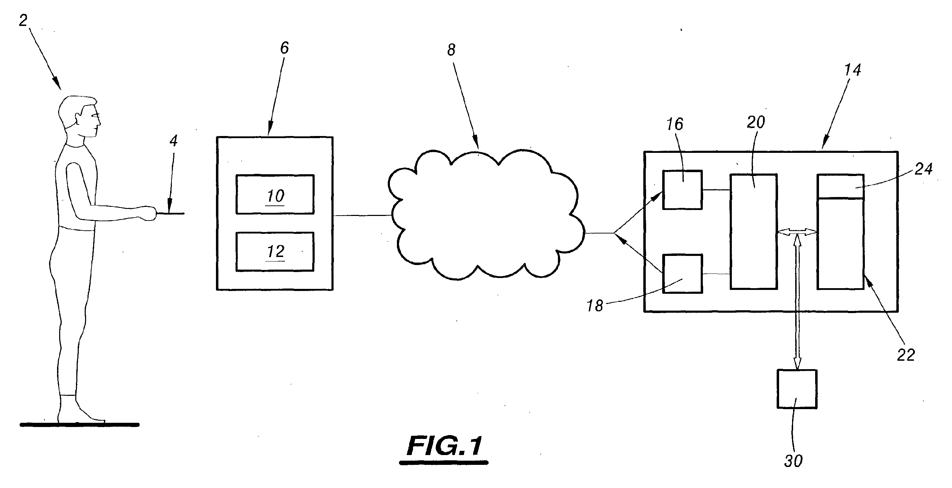

La figure 1 représente un joueur 2 en possession d'un moyen de paiement 4, et une borne d'accès 6 raccordée à un réseau de transmission d'informations 8.

La borne d'accès 6 comporte des moyens audiophoniques 10 et des moyens 12 d'acquisition d'informations pour jouer, ces moyens étant mis à la disposition du joueur.

La borne d'accès 6 peut être réalisée de différentes façons. Par exemple, il peut s'agir d'un téléphone muni d'un clavier à touches. Dans ce cas, les moyens audiophoniques 10 se composent du combiné du téléphone et les moyens 12 d'acquisition d'informations sont constitués par le clavier à touches de celui-ci.

Le réseau 8 peut être formé par tout type de réseau capable de transporter des messages audiophoniques. Par exemple, le réseau est constitué par le réseau téléphonique d'un opérateur de télécommunication.

Le réseau 8 est relié à un serveur vocal de jeu 14 mis à la disposition du joueur par une société de jeu. Le serveur vocal 14 comprend un récepteur d'informations 16, un émetteur d'informations 18 et un calculateur 20 associé à des moyens de stockage d'informations 22.

Les moyens de stockage 22 comprennent en outre une base de données 24 de type classique de stockage des messages audiophoniques préenregistrés sous forme de messages numériques.

Le récepteur 16 est destiné à convertir les informations émises par le joueur 2 à l'aide de la borne 6 à travers le réseau 8 en un signal numérique utilisable par le calculateur 20.

L'émetteur 18 permet de convertir un message numérique de la base de données 24 en un signal analogique et d'émettre ce signal analogique sur le réseau 8 à destination de la borne d'accès 6 utilisée par le joueur.

La base de données 24 stocke tous les messages audiophoniques nécessaires pour guider et diriger le joueur lors des échanges d'informations entre la borne d'accès 6 et le serveur vocal 14, lors du jeu.

Le serveur 14 comprend également un moyen d'accès 30 aux moyens de stockage 22 associés au calculateur 20. Ce moyen 30 permet à la société de jeu par exemple d'accéder aux moyens de stockage 22 et de mettre à jour les informations stockées de ceux-ci comme cela sera décrit plus en détail par la suite.

Une telle structure permet donc à des joueurs d'accéder à un serveur vocal de jeu mis à leur disposition par une société de jeu, par l'intermédiaire d'un réseau de transmission d'informations par exemple à partir de bornes d'accès déjà existantes et dont la manipulation est familière au public.

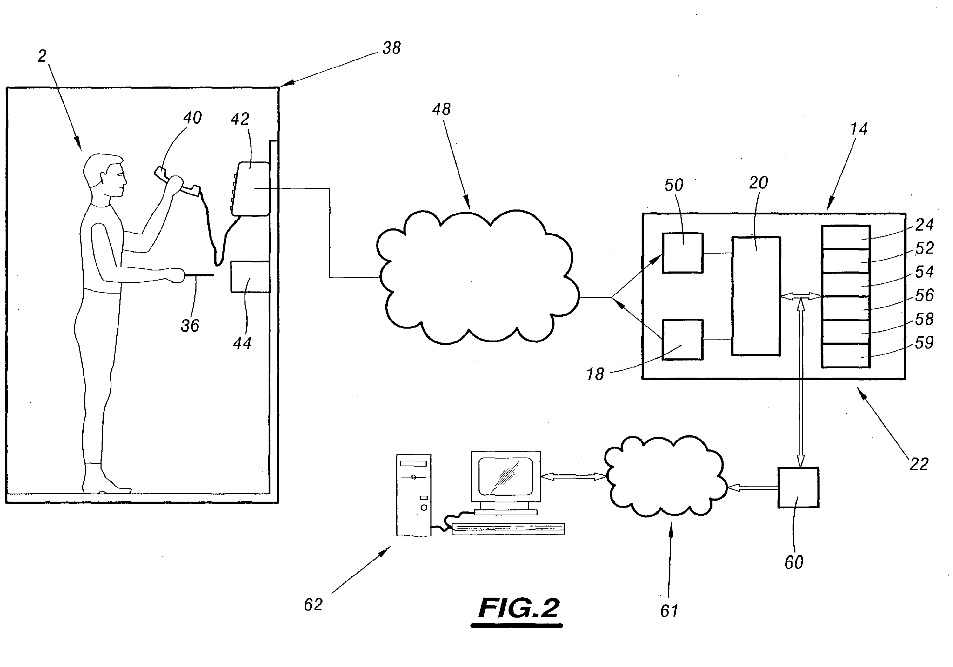

La figure 2 représente un mode particulier de réalisation de l'architecture matérielle de la figure 1 dans lequel le moyen de paiement 4 utilisé par le joueur 2 est un ticket 36 de jeu prépayé et la borne d'accès 6 est un téléphone public 38.

Les moyens audiophoniques 10 sont constitués par le combiné 40 du téléphone public et les moyens 12 d'acquisition d'informations comprennent le clavier à touches 42 et un lecteur 44 de carte à mémoire du téléphone public de type classique.

Le clavier à touches 42 comporte au moins dix touches numérotées de zéro à neuf.

Le réseau 8 de transmission d'informations est un réseau téléphonique 48 classique.

Le serveur vocal 14 comporte un convertisseur 50 de signaux DTMF (Dual Tone Multifrequency), en signaux numériques utilisables par le calculateur 20, ce convertisseur entrant dans la constitution du récepteur 16 décrit en regard de la figure 1.

L'émetteur 18, le calculateur 20 et les moyens de stockage d'informations 22 sont analogues à ceux décrits en regard de la figure 1.

Le serveur vocal comporte également des moyens 52 de contrôle d'accès au jeu proposé, des moyens 54 d'identification des réponses gagnantes à ce jeu, des moyens 56 d'enregistrement des informations de jeu et des informations d'authentification correspondantes portées par le ticket de jeu 36, des moyens 58 de gestion des gains, et des moyens 59 d'enregistrement des informations gagnantes.

Ces moyens peuvent comporter des modules logiciels exécutables par le calculateur 20.

Ces modules sont réalisés à l'aide de systèmes de gestion de bases de données de type classique et ils sont chacun associés à une base de données enregistrée dans les moyens de stockage d'informations 22.

Le moyen 30 d'accès aux moyens de stockage d'informations 22 du serveur 14 est constitué par une carte 60 de connexion à un réseau de transmission d'informations 61, formé par exemple par un réseau à grande distance classique WAN "WIDE AREA NETWORK" ou un réseau local LAN "LOCAL AREA NETWORK" . Grâce à la carte 60 et à ce réseau 61, les moyens de stockage d'informations 22 du serveur 14 peuvent être mis à jour par la société de jeu par exemple à l'aide d'un terminal de transfert d'informations 62 connecté à ce réseau.

Ainsi, la société de jeu peut mettre à jour les informations relatives aux réponses gagnantes, aux gains, etc.. dans les moyens de stockage d'informations 22.

Dans une variante (non représentée) du système de jeu selon l'invention, la borne d'accès 6 est formée par un micro-ordinateur raccordé au réseau 8 à l'aide d'un modulateur-démodulateur, de façon classique.

Les moyens audiophoniques 10 sont alors composés d'une carte électronique installée dans le micro-ordinateur et associée à des haut-parleurs. La carte électronique est destinée à convertir les signaux audiophoniques en signaux numériques et vice-versa, de façon classique.

Les moyens 12 d'acquisition d'informations pour jouer sont formés par le clavier du micro-ordinateur et/ou la souris.

Le récepteur 16 du serveur 14 est un modulateur-démodulateur.

Une telle architecture matérielle représente un équivalent fonctionnel de l'architecture matérielle décrite à l'aide de la figure 2, de sorte que l'on ne la décrira pas plus en détail.

Le fonctionnement du système de jeu va maintenant être décrit à l'aide de la figure 2.

Ce fonctionnement est décrit dans le cas particulier d'un jeu de loto utilisant comme moyen de paiement 4 un ticket de jeu prépayé comme cela a été mentionné précédemment.

Ce fonctionnement se déroule en trois phases successives, à savoir :
- une première phase d'enregistrement des informations de jeu,
- une deuxième phase de détermination des réponses gagnantes, et
- une troisième phase de vérification des gains.

Les tickets de jeu 36 imprimés et commercialisés portent un code d'authentification et par exemple le numéro de téléphone du serveur vocal 14 de jeu.

Les codes d'authentification de l'ensemble des tickets de jeu commercialisés sont enregistrés par exemple par la société de jeu dans la base de données des moyens 52 de contrôle d'accès au jeu par l'intermédiaire de la carte de connexion 60 au réseau 61 grâce au terminal 62.

Un joueur tel que le joueur 2 achète un ticket de jeu 36 par exemple auprès d'un distributeur et se déplace jusqu'à un téléphone public tel que le téléphone public 38. Il compose ensuite le numéro de téléphone du serveur vocal 14 porté par le ticket de jeu à l'aide du clavier à touches 42 du téléphone public.

Le joueur est alors mis en relation téléphonique avec le serveur vocal 14 par l'intermédiaire du réseau 48 pour déclencher la phase d'enregistrement des informations de jeu.

Le serveur vocal 14 émet un signal contenant un message audiophonique d'accueil du jeu enregistré dans la base de données 24, à l'aide de l'émetteur 18, sur le réseau 48. Le réseau 48 achemine ce signal jusqu'au téléphone public 38 utilisé par le joueur. Les moyens audiophoniques 40 du téléphone 38 convertissent le signal en un message audible et compréhensible par le joueur.

Ce message audiophonique compréhensible par le joueur invite ce dernier à composer le code d'authentification porté par le ticket de jeu à l'aide du clavier à touches 42.

Chaque fois qu'une touche du clavier est enfoncée, un signal DTMF (Dual Tone Multifrequency) de type classique est émis par le téléphone public 38 sur le réseau 48 et acheminé jusqu'au convertisseur 50 du serveur vocal 14. Le convertisseur 50 convertit ce signal DTMF en un signal numérique correspondant au chiffre que porte la touche enfoncée, ce signal numérique étant utilisable par le calculateur 20.

Lorsque la totalité des chiffres du code d'authentification ont été reçus par le serveur 14, les moyens 52 de contrôle d'accès recherchent dans leur base de données si le code d'authentification entré correspondant à un code stocké par la société de jeu.

Si ce code n'existe pas, le ticket du joueur est considéré comme frauduleux et le serveur 14 met fin à la relation téléphonique avec le joueur.

Dans le cas contraire, le serveur 14 transmet au joueur un nouveau message vocal l'invitant à composer les différents chiffres qu'il désire jouer lors du prochain tirage du jeu par exemple.

Le joueur compose à l'aide du clavier à touches 42, les différents chiffres qu'il joue. Ces différents chiffres sont transmis au serveur de la même façon que le code d'authentification.

Après avoir reçu la combinaison des chiffres joués, les moyens 56 d'enregistrement des informations de jeu enregistrent les chiffres joués et le code d'authentification du ticket correspondant dans leur base de données.

Une fois cette opération terminée, le serveur 14 met fin à la relation téléphonique avec le joueur, ce qui termine la phase d'enregistrement des informations de jeu.

La possibilité d'enregistrer des informations de jeu par des joueurs est interrompue quelques instants avant le début du tirage.

La phase de détermination des réponses gagnantes débute par le tirage aléatoire des chiffres gagnants. Cette phase peut par exemple être contrôlée de façon classique par huissier, etc...

Les chiffres gagnants du tirage et les gains associés sont respectivement enregistrés par exemple par la société de jeu éventuellement sous contrôle d'huissier, dans la base de données des moyens 59 d'enregistrement des informations gagnantes et dans la base de données des moyens 58 de gestion des gains.

Ensuite, à l'aide des informations de jeu enregistrées dans la base de données des moyens 56 et des chiffres gagnants enregistrés dans la base de données des moyens 59, le serveur détermine l'ensemble des codes d'authentification des tickets correspondant à une combinaison de chiffres gagnante.

Cet ensemble de codes d'authentification de tickets gagnants est enregistré dans la base de données des moyens 54 d'indication des réponses gagnantes.

Une fois que le tirage aléatoire a eu lieu et que la base de données des moyens 59 d'indication des réponses gagnantes du serveur 14 a été mise à jour, la phase de détermination des réponses gagnantes s'achève et la phase de vérification des gains commence.

Lors de cette phase de vérification des gains, le joueur désirant connaître les gains associés à son ticket se déplace jusqu'à un téléphone public.

Il accède au serveur 14 de la même façon que décrit précédemment en tapant le code d'authentification de son ticket de jeu, pour permettre au serveur 14 de vérifier l'authenticité du ticket de jeu.

Si le code d'authentification est trouvé dans la base de données des moyens 52, le ticket de jeu est considéré comme authentique et le serveur recherche alors le code d'authentification dans la base de données des moyens 54 d'indication des réponses gagnantes.

Si le code d'authentification n'est pas trouvé dans la base de données des moyens 54, le serveur vocal 14 envoie un message au joueur lui indiquant que la combinaison jouée est perdante.

Dans le cas contraire, c'est à dire si le code d'authentification est trouvé dans la base de données du moyen 54, le serveur recherche le gain associé à la réponse gagnante dans la base de données des moyens 58 de gestion des gains, puis envoie au joueur un message lui indiquant le montant du gain et les démarches à suivre pour l'encaisser.

Dans une variante de réalisation du système de jeu de la figure 2, le moyen de paiement 4 est une carte à mémoire dans laquelle est stocké le code d'authentification de la carte.

Grâce à la carte à mémoire, le fonctionnement du système de jeu décrit, peut être simplifié et notamment les étapes d'authentification du ticket de jeu.

En effet, les étapes d'authentification du ticket de jeu décrites précédemment correspondent aux étapes où le joueur compose sur le clavier à touches du téléphone public le code d'authentification porté par le ticket de jeu.

Avec une carte à mémoire, le joueur n'a plus besoin de composer le code d'authentification sur le clavier.

En effet, lors de l'étape d'authentification, le joueur introduit la carte à mémoire dans le lecteur de carte 44 du téléphone public 38. Ensuite, le téléphone public 38 à l'aide du lecteur 44 de carte lit le code d'authentification dans la mémoire de la carte et le transmet automatiquement au serveur.

Les autres étapes du fonctionnement de cette variante sont similaires à celles décrites en regard de la figure 2 et dans le cas où le moyen de paiement est un ticket de jeu.

On remarquera également que d'une façon similaire à ce qui vient d'être décrit pour simplifier l'étape d'authentification du ticket de jeu, il est également possible de simplifier l'étape de transmission des informations de jeu à l'aide d'une carte à mémoire contenant des informations de jeu préenregistrées dans sa mémoire.

L'étape de transmission des informations de jeu décrite précédemment correspond à l'étape où le joueur compose la combinaison des chiffres qu'il joue sur le clavier à touches du téléphone public.

Dans une autre variante du système de jeu, le moyen de paiement est une carte de crédit ou une carte téléphonique.

Dans cette variante, l'étape d'authentification du ticket de jeu de la phase d'enregistrement des informations de jeu précédemment décrite, est remplacée par une étape de paiement en ligne.

Lors de l'étape de paiement en ligne, le joueur introduit sa carte dans le lecteur de carte du téléphonie public.

Le serveur 14 vérifie alors si le montant nécessaire pour jouer peut être prélevé sur la carte.

Si oui, le montant nécessaire est prélevé et un code d'authentification est transmis au joueur. Dans le cas contraire, le serveur met fin à la relation téléphonique avec le joueur.

La suite du déroulement du jeu est similaire à celui décrit dans le cas où le moyen de paiement est un ticket de jeu.

On remarquera que cette variante ne nécessite pas l'impression et la commercialisation de tickets de jeu, mais utilise des moyens de paiement déjà réalisés pour d'autres applications.

Dans une autre variante du système de jeu, les moyens de paiement consistent en un numéro de compte jeu.

Le déroulement du jeu est précédé par une phase d'ouverture d'un compte jeu auprès de la société de jeu et d'attribution d'un numéro de compte jeu.

Le compte jeu peut être par la suite crédité à l'aide de tous moyens usuels de paiement, tels que chèque, carte de crédit, virement bancaire, prélèvement automatique ou autres.

Lors de la phase d'enregistrement des informations de jeu, le joueur communique au serveur vocal son numéro de compte jeu et le montant de sa mise est alors directement prélevé sur ce compte.

Pour les autres phases du déroulement du jeu décrites précédemment dans le cas d'un ticket de jeu, le numéro de compte remplace le code d'authentification.

On remarquera que cette variante ne nécessite ni la commercialisation de tickets de jeu, ni par exemple l'utilisation de lecteur de carte et que les gains peuvent être directement crédités sur le compte jeu du joueur.

On remarquera qu'un système de jeu selon l'invention peut avantageusement être utilisé pour remplacer les jeux qui nécessitent actuellement un support en papier.

Toutefois, le système de jeu de l'invention est suffisamment flexible pour s'adapter à d'autres jeux ne nécessitant pas de support en papier tels que machine à sous, roulette, voire même à des jeux de société.

Le système de jeu peut aussi être utilisé pour créer rapidement de nouveaux jeux sans coût excessif puisque le système de jeu selon l'invention utilise une architecture matérielle en grande partie déjà existante et que le déroulement du jeu est en effet géré par un serveur très simple à configurer.

Il apparaît donc qu'un système de jeu selon l'invention nécessite une architecture matérielle moins coûteuse et permet de s'adapter facilement à une grande variété de jeux.

## Revendications

1. Système de jeu comportant :
- un serveur vocal (14) de gestion et de contrôle du déroulement d'au moins un jeu,
- des bornes d'accès (6) multiples au serveur vocal (14) à travers un réseau (8) de transmission d'informations, lesdites bornes (6) étant équipées de moyens audiophoniques (10) et comportant des moyens d'acquisition (12) d'informations d'accès et d'activation du jeu et des informations de jeu proprement dites, pour permettre à un joueur (2) de participer au jeu proposé par le serveur à partir d'une borne d'accès (6), sous la direction du serveur (14), chaque borne d'accès (6) comportant en outre un lecteur de carte à mémoire, et
- une carte à mémoire (4),
**caractérisé en ce que** la carte à mémoire (4) porte en outre les informations de jeu proprement dites.

2. Système selon la revendication 1, **caractérisé en ce que** le réseau (8) de transmission d'informations est un réseau téléphonique (48).

3. Système selon la revendication 1 ou 2, **caractérisé en ce que** les bornes (6) sont formées par des téléphones.

4. Système selon la revendication 3, **caractérisé en ce que** les téléphones sont des téléphones publics (38).

5. Système selon la revendication 1 ou 2, **caractérisé en ce que** les bornes (6) sont formées par des micro-ordinateurs équipés en outre de modulateurs/démodulateurs.

6. Système selon l'une quelconque des revendications précédentes, **caractérisé en ce que** le lecteur de carte (44) est adapté pour recevoir une carte de jeu prépayée (4) portant les informations d'accès au jeu.

7. Système selon l'une quelconque des revendications précédentes, **caractérisé en ce que** la carte à mémoire (4) est une carte de crédit permettant au joueur d'alimenter un compte jeu associé au serveur.

8. Système selon l'une quelconque des revendications précédentes, **caractérisé en ce que** le serveur (14) est associé à une première base de données (52) contenant des informations de contrôle d'accès au jeu, une seconde base de données (54) contenant des informations relatives aux réponses gagnantes au jeu et une troisième base de données (58) contenant des informations relatives au gain du jeu.
